# EUROPEAN PATENT APPLICATION

(11) **EP 4 645 962 A1**
(43) Date of publication of application: **05.11.2025**
(21) Application number: 23910311.2
(22) Date of filing: 21.12.2023
(51) Int. Cl.: H04W 52/02, H04W 72/04

(54) **COMMUNICATION OPERATION EXECUTION METHOD AND APPARATUS, AND TERMINAL**

(30) Priority: 28.12.2022 CN 202211696935
(71) Applicant: Vivo Mobile Communication Co., Ltd., Dongguan, Guangdong 523863 (CN)
(72) Inventor: CHEN, Li, Dongguan, Guangdong 523863 (CN)
(74) Representative: Walaski, Jan Filip
(86) International application number: PCT/CN2023/140471
(87) International publication number: WO 2024/140382

(57) **Abstract**

The present application relates to the technical field of communications, and discloses a communication operation execution method and apparatus, and a terminal. The communication operation execution method of embodiments of the present application comprises: under a preset condition, a terminal executes an operation, the operation comprising at least one of the following: an operation associated with a low power wake up signal (LP-WUS); turning off a main receiver or a main receiving module; and stopping receiving the signal by means of the main receiver or the main receiving module.

## Description

### CROSS-REFERENCE TO RELATED APPLICATIONS

This application claims priority to Chinese Patent Application No. 202211696935.9 filed on December 28, 2022, which is incorporated herein by reference in its entirety.

### TECHNICAL FIELD

This application belongs to the field of communication technologies, and specifically, to a communication operation execution method and apparatus, and a terminal.

### BACKGROUND

A low power wave up signal (Low Power Wake Up Signal, LP-WUS) and a low power wake up module (which may alternatively be referred to as a low power wake up receiver, LP-WUR) are introduced into some communication systems. The LP-WUR is a module or a radio associated with the LP-WUS. After an LP-WUR technology and an LP-WUR technology is introduced, a terminal usually further includes a main radio or a main radio module. However, at present, the terminal mainly receives a signal by the main radio or the main radio module. As a result, power consumption of the terminal is high.

### SUMMARY

Embodiments of this application provide a communication operation execution method and apparatus, and a terminal, and can solve a problem of high power consumption of the terminal.

In a first aspect, a communication operation execution method is provided, including:
performing, by a terminal, an operation under a preset condition, where the operation includes at least one of the following:
an operation associated with a low power wake up signal (LP-WUS);
disabling a main radio or a main radio module; and
stopping receiving a signal by the main radio or the main radio module.

In a second aspect, a communication operation execution apparatus is provided, including:
an execution module, configured to: perform, by a terminal, an operation under a preset condition, where the operation includes at least one of the following:
an operation associated with a low power wake up signal (LP-WUS);
disabling a main radio or a main radio module; and
stopping receiving a signal by the main radio or the main radio module.

In a third aspect, a terminal is provided. The terminal includes a processor and a memory. The memory stores a program or an instruction executable on the processor, and the program or the instruction, when executed by the processor, implements the steps of the communication operation execution method as described in the embodiments of this application.

In a fourth aspect, a terminal is provided, including a processor and a communication interface. The processor is configured to perform an operation under a preset condition. The operation includes at least one of the following: an operation associated with a low power wake up signal (LP-WUS); disabling a main radio or a main radio module; and stopping receiving a signal by the main radio or the main radio module.

In a fifth aspect, a readable storage medium is provided. The readable storage medium stores a program or an instruction. The program or instruction, when executed by a processor, implements the steps of the communication operation execution method as described in the embodiments of this application.

In a sixth aspect, a chip is provided. The chip includes a processor and a communication interface. The communication interface is coupled with the processor. The processor is configured to run a program or an instruction to implement the communication operation execution method as described in the embodiments of this application.

In a seventh aspect, a computer program/program product is provided. The computer program/program product is stored in a storage medium. The computer program/program product is executed by at least one processor to implement the steps of the communication operation execution method as described in the embodiments of this application.

In the embodiments of this application, a terminal performs an operation under a preset condition. The operation includes at least one of the following: an operation associated with an LP-WUS; disabling a main radio or a main radio module; and stopping receiving a signal by the main radio or the main radio module. In this way, when a preset condition is satisfied, at least one of an operation associated with a low power wake up signal (LP-WUS), disabling a main radio or a main radio module, and stopping receiving a signal by the main radio or the main radio module, thereby reducing power consumption of the terminal.

### BRIEF DESCRIPTION OF THE DRAWINGS

FIG. 1 is a block diagram of an applicable wireless communication system according to an embodiment of this application;
FIG. 2 is a schematic structural diagram of an applicable terminal according to an embodiment of this application;
FIG. 3 is a schematic structural diagram of an applicable signal according to an embodiment of this application;
FIG. 4 is a flowchart of a communication operation execution method according to an embodiment of this application;
FIG. 5 is a flowchart of a configuration transmission method according to an embodiment of this application;
FIG. 6 is a structural diagram of a communication operation execution apparatus according to an embodiment of this application;
FIG. 7 is a structural diagram of a configuration transmission apparatus according to an embodiment of this application;
FIG. 8 is a structural diagram of a communication device according to an embodiment of this application; and
FIG. 9 is a structural diagram of another terminal according to an embodiment of this application.

### DETAILED DESCRIPTION

The technical solutions in the embodiments of this application are clearly described in the following with reference to the accompanying drawings in the embodiments of this application. Apparently, the described embodiments are merely some rather than all of the embodiments of this application. Based on the embodiments of this application, all other embodiments obtained by a person of ordinary skill in the art fall within the protection scope of this application.

This specification and claims of this application, and terms "first" and "second" are used to distinguish similar objects, but are unnecessarily used to describe a specific sequence or order. It will be appreciated that the terms used in this way are exchangeable in a proper case, so that the embodiments of this application can be implemented in an order different from the order shown or described herein, and objects distinguished by "first" and "second" are usually of the same category and the number of the objects is not defined. For example, there may be one or more first objects. In addition, the expression "and/or" in the description and claims represents at least one of connected objects, and the character "/" generally represents that the associated objects are in an "or" relationship.

The term "indication" in the specification and claims of this application may be an explicit indication or an implicit indication. The explicit indication may be understood as that a transmitting party explicitly notifies a receiving party of an operation that needs to be performed or a request result in a transmitted indication. The implicit indication may be understood as that a receiving party makes a determination according to an indication transmitted by a transmitting party, and determines, according to a determination result, an operation that needs to be performed or a request result.

It should be noted that, the technology described in the embodiments of this application is not limited to a long term evolution (Long Term Evolution, LTE)/LTE-advanced (LTE-Advanced, LTE-A) system, but may be further used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access, (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually interchangeably used, and the technologies described may be applied to the systems and radio technologies mentioned above, and may alternatively be applied to other systems and radio technologies. The following describes a new radio (New Radio, NR) system for the example purpose and uses the term NR in most of the following descriptions. However, these technologies can alternatively be applied to applications except the NR system application, such as a 6^{th} generation (6^{th} Generation, 6G) communication system.

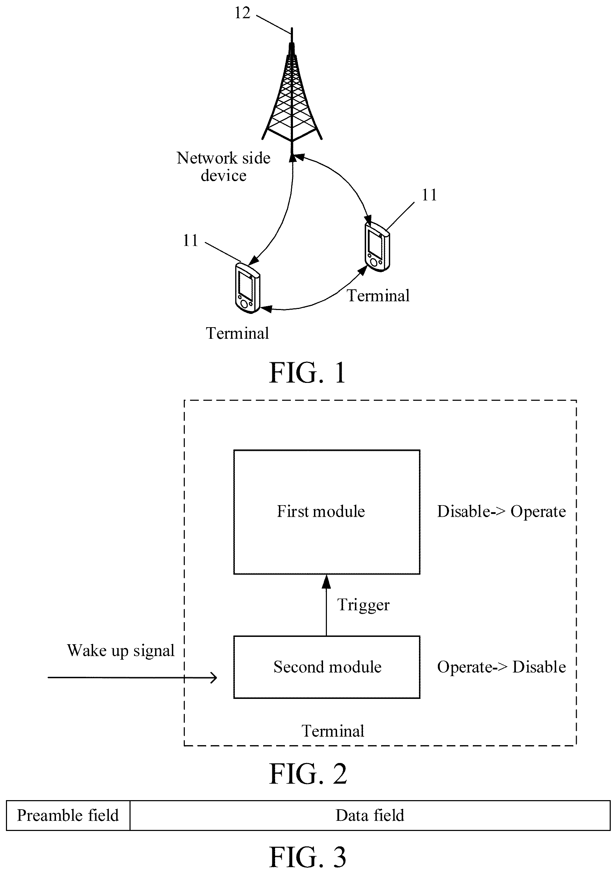

FIG. 1 shows a block diagram of an applicable radio communication system according to an embodiment of this application. The wireless communication system includes a terminal 11 and a network side device 12. The terminal 11 may be a terminal-side device, such as a mobile phone, a tablet personal computer (Tablet Personal Computer), a laptop computer (Laptop Computer) or a notebook computer, a personal digital assistant (Personal Digital Assistant, PDA), a palm computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), smart home (home devices with a wireless communication function, such as a refrigerator, TV, a washing machine, or furniture), a game machine, a personal computer (personal computer, PC), a teller machine or a self-service machine. The wearable device includes: a smart watch, a smart band, a smart headset, smart glasses, smart jewelry (a smart bracelet, a smart hand chain, a smart ring, a smart necklace, a smart bangle, a smart anklet, and the like), a smart wrist strap, a smart dress, and the like. It should be noted that, in the embodiments of this application, a specific type of the terminal 11 is not limited. The network side device 12 may include an access network device or a core network device. The access network device may alternatively be referred to as a radio access network device, a Radio Access Network (Radio Access Network, RAN), a radio access network function, or a radio access network unit. The access network device may include a base station, a wireless local area network (Wireless Local Area Networks, WLAN) access point, a wireless fidelity (Wireless Fidelity, WiFi) node, and the like. The base station can be referred to as a node B, an evolved node B (Evolved Node B, eNB), an access point, a base transceiver station (Base Transceiver Station, BTS), a radio base station, a radio transceiver, a basic service set (Basic Service Set, BSS), an extended service set (Extended Service Set, ESS), a home B node, a home evolved B node, a transmission and reception point (Transmission and Reception Point, TRP), or any other suitable term in the art, as long as the same technical effects are achieved. The base station is not limited to a particular technical vocabulary. It should be noted, the base station in the NR system is used only as an example for description in the embodiments of this application, but a specific type of the base station is not limited. The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (NEF), a local NEF (Local NEF, or L-NEF), a binding support function (Binding Support Function, BSF), an application function (Application Function, AF), and the like. It should be noted that, in the embodiments of this application, only the core network device in the NR system is taken as an example for introduction, but a specific type of the core network device is not limited.

In some embodiments, an LP-WUS may be received by an LP WUR to wake up a main communication module, and the like. As shown in FIG. 3, the terminal includes two modules. A first module is a main communication module for transmitting and receiving mobile communication data. A second module is a low power wake up radio for receiving a low power wake up signal and a low power beacon signal that are transmitted by a transmitting end. The low power wake up signal may be used for waking up the main communication module. The low power beacon signal may be used for providing time reference information and other information for receiving the low power wake up signal, and may be further used for providing wake up link management.

As shown in FIG. 2, when the first module is not woken up by the second module, the first module is always in an off state, and does not transmit or receive data. When downlink data arrives, the second module detects a wake up signal transmitted by the transmitting end, and the wake up signal includes information about the terminal. The second module triggers the first module to switch from the off state to an operating state, to perform data reception and transmission. The second module may be continuously or discontinuously enabled. When enabled, the second module may receive the low power wake up signal and the low power beacon signal.

In some embodiments, a basic framework of the LP-WUS may be shown in FIG. 3, including:
a preamble field (Preamble field) and a data field (Data field).

A purpose of the Preamble field includes but is not limited to: at least one of detection, synchronization, and data rate determining of an LP-WUS. In addition, preamble may be further used for indicating a user identity, a user group identification, or the like. Data field may be used for carrying a data part. In addition, Data field may further include at least one of the following:
a user identity or a user group identification, a specific bit for waking up a terminal, a bit carrying another function such as system information update, an emergency message, a random access channel (Random Access Channel, RACH), and a related operation after a terminal is woken up. The related operation after the terminal is woken up may be: whether a synchronization signal block (Synchronization Signal Block, SSB) needs to be received, whether cell selection and reselection need to be performed, whether system information needs to be received, or the like.

In addition, similarly, the beacon (Beacon) signal may alternatively include a preamble and a data part.

A communication operation execution method and apparatus, and a terminal according to the embodiments of this application are described in detail below by some embodiments and application scenarios thereof with reference to the accompanying drawings.

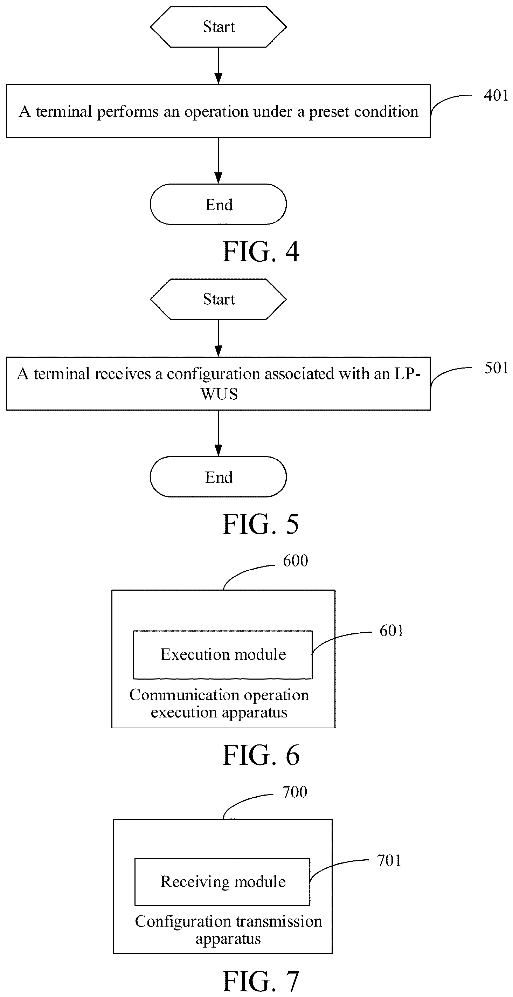

With reference to FIG. 4, FIG. 4 is a flowchart of a communication operation execution method according to an embodiment of this application. As shown in FIG. 4, the method includes the following steps:
Step 401: A terminal performs an operation under a preset condition, where the operation includes at least one of the following:
an operation associated with an LP-WUS;
disabling a main radio (Main receiver) or a main radio module; and
stopping receiving a signal by the main radio or the main radio module.

The above preset condition may be a preset condition associated with at least one of cell measurement performance, a moving state, a receiving state, a terminal type, and a terminal capability, for example: the cell measurement performance is greater than or not less than a preset threshold; the mobile state indicates that the terminal is in a low mobility state, the terminal has received preset information, the terminal type is low-capability terminal, and the terminal capability is to support an LP-WUR and an LP-WUS.

The above operation associated with the LP-WUS may be an energy-saving operation associated with the LP-WUS. Furthermore, when the operation associated with the LP-WUS is performed, the main communication module or the main radio of the terminal is in an off state or a non-operating state.

The above main radio module may be a main communication module.

The stopping receiving a signal by the main radio or the main radio module may include at least one of the following:
stopping receiving a physical downlink control channel (Physical Downlink Control Channel, PDCCH) by the main radio or the main radio module; and
stopping receiving the LP-WUS by the main radio or the main radio module.

In this embodiment of this application, through the above steps, at least one of an operation associated with a low power wake up signal (LP-WUS), disabling a main radio or a main radio module, and stopping receiving a signal by the main radio or the main radio module can be implemented when a preset condition is satisfied, thereby reducing power consumption of the terminal.

In addition, a scenario in which the terminal uses the LP-WUS function can be limited through the above preset condition, and mobility service delay performance of the terminal can be effectively ensured while ensuring power saving of the terminal.

In an optional implementation, the operation associated with the LP-WUS includes at least one of the following:
monitoring the LP-WUS;
activating or enabling an LP-WUR;
activating or enabling an LP-WUS function (LP-WUS enable);
entering a low power (Low Power, LP) sleep state; and
receiving the LP-WUS by the LP-WUR.

The monitoring the LP-WUS may be monitoring the LP-WUS, instead of the physical downlink control channel (Physical Downlink Control Channel, PDCCH). Furthermore, during the monitoring of the LP-WUS, the main communication module or the main radio is in an off state or a non-operating state.

The activating or enabling an LP-WUR means monitoring or receiving a signal by the LP-WUR.

The above activating or enabling an LP-WUS function means starting to monitor the LP-WUS.

The above entering an LP sleep state may be that the terminal may monitor the LP-WUS after entering the LP sleep state.

The above receiving the LP-WUS by the LP-WUR may be receiving the LP-WUS by the LP-WUR that has been activated or enabled.

In this implementation, power consumption of the terminal can be reduced through the above operation associated with the LP-WUS.

Optionally, the above activating or enabling an LP-WUS function includes:
temporarily activating or enabling the LP-WUS function.

The above temporarily activating or enabling the LP-WUS function may mean that the LP-WUS function is activated or enabled for short time.

By temporarily activating or enabling the LP-WUS function, flexibility of the terminal for using the LP-WUS function can be improved, thereby further enhancing an energy saving effect of the terminal.

In some implementations, the temporarily activating or enabling the LP-WUS function includes at least one of the following:
activating or enabling the LP-WUS function, where a duration of activating or enabling the LP-WUS function is a preset duration, or time of activating or enabling the LP-WUS function is a preset quantity of cycles; and
activating or enabling the LP-WUS function till deactivation or disabling of the LP-WUS function.

In this implementation, the LP-WUS monitoring or the LP-WUR can be temporarily activated or enabled for the preset duration, or the LP-WUS monitoring or the LP-WUR can be temporarily activated or enabled for the preset quantity of cycles, to improve the flexibility of the terminal for using the LP-WUS function, thereby further enhancing the energy saving effect of the terminal.

In some implementations, the activating or enabling the LP-WUS function till deactivation or disabling of the LP-WUS function includes at least one of the following:
activating or enabling the LP-WUS function until a network indicates the terminal to deactivate or disable the LP-WUS function;
activating or enabling the LP-WUS function until the network indicates that the terminal could disable the LP-WUR;
activating or enabling the LP-WUS function until a preset condition corresponding to deactivation or disabling of LP-WUS monitoring is satisfied; and
activating or enabling the LP-WUS function until a preset condition corresponding to deactivation or disabling of the LP-WUR is satisfied.

That the network indicates that the terminal could disable the LP-WUR may be understood as that the network indicates that the terminal could disable the LP-WUR or allows the terminal to disable the LP-WUR.

The above preset condition may be the second preset condition provided in this embodiment of this application. For details, refer to descriptions in the following implementations.

In this implementation, the LP-WUS function may be temporarily activated or enabled until next deactivation or disabling. The next deactivation or disabling includes at least one of the following:
the network indicates the terminal to deactivate or disable the LP-WUS;
the network indicates that the terminal could disable the LP-WUR; and

when the second preset condition is satisfied, the LP-WUS monitoring or the LP-WUR is deactivated or disabled.

The LP-WUS function is activated or enabled till deactivation or disabling of the LP-WUS function. This not only reduces the power consumption of the terminal, but also deactivates or disables the LP-WUS function in time, so that the terminal can enter a non-low power mode in time for communication, thereby improving flexibility of communication of the terminal.

In an optional implementation, that a terminal performs an operation includes at least one of the following:
performing, after or within first preset time, the operation associated with the LP-WUS;
disabling the main radio or the main radio module after or within second preset time; and
stopping receiving the signal by the main radio or the main radio module after or within third preset time.

It should be noted that, in this embodiment of this application, all the preset times may be configured by a network side or stipulated in an agreement, and time points or durations of different preset times may be the same or different.

In this implementation, at least one of the following may be implemented:
monitoring the LP-WUS, and further, monitoring the LP-WUS after the preset time;
enabling the LP-WUR radio/radio module, and further, enabling the LP-WUR radio/radio module within or after the preset time;
activating or enabling the LP-WUS function, and further, activating or enabling the LP-WUS function within or after the preset time;
entering the LP-Sleep state, and further, entering the LP-Sleep state within or after the preset time;
disabling the main radio/the main radio module, and further, enabling the main radio/main radio module within or after the preset time; and
stopping using the main radio or the main radio module to monitor the PDCCH, and further, stopping using the Main radio to monitor the PDCCH within or after a preset time. The PDCCH may be a PDCCH corresponding to a paging message, or a PDCCH corresponding to another message.

The LP-WUS is received by the LP-WUR. Further, the LP-WUS is received by the LP-WUR within or after the preset time.

Receiving the LP-WUS by the main radio or the main radio module is stopped. Further, receiving the LP-WUS by the main radio is stopped within or after the preset time.

In this implementation, the above operation is performed within or after the preset time, so that flexibility of terminal communication can be improved, which is more beneficial to saving power consumption of the terminal. In addition, the above operation is performed after the preset time, so that the terminal may get prepared in advance, to improve service performance, for example, to ensure that a communication delay is not affected.

In an optional implementation, the preset condition includes at least one of the following:
a first preset condition is satisfied, and a second preset condition is not satisfied,
where the first preset condition includes a condition associated with at least one of the following:
   cell measurement performance, a moving state, a receiving state, a terminal type, and a terminal capability; and
   the second preset condition includes a condition associated with at least one of the following:
      cell measurement performance, a moving state, a receiving state, a terminal type, and a terminal capability.

The above first preset condition and the above second preset condition may be configured by a network side or stipulated in an agreement

In this implementation, the power consumption of the terminal can be reduced through the above first preset condition and the above second preset condition. In addition, usage scenarios of the LP-WUS can be effectively limited through the above preset condition, thereby ensuring fast reachability and mobility of the terminal.

That the preset condition includes at least one of the above may be understood as that:
the first preset condition is satisfied; or
the second preset condition is not satisfied; or
the first preset condition is satisfied, and the second preset condition is not satisfied.

In some implementations, the above preset condition may include:
the first preset condition is satisfied within eighth preset time, and the second preset condition is not satisfied within the eighth preset time; or
the first preset condition is satisfied within eighth preset time, or the second preset condition is not satisfied within the eighth preset time.

In this implementation, the above operation may be performed when the first preset condition is satisfied within the eighth preset time and the second preset condition is not satisfied within the eighth preset time: or the above operation may be performed when the first preset condition is satisfied within the eighth preset time, or the above operation may be performed when the second preset condition is not satisfied within the eighth preset time.

In some implementations, the first preset condition includes at least one of the following:
measurement performance of a serving cell satisfies a first performance condition;
measurement performance of a neighboring cell satisfies a second performance condition;
the terminal is in a first moving state;
the terminal is not in a second moving state, where a moving speed of the first moving state is less than a moving speed of the second moving state;
the terminal has received first indication information, where the first indication information is used for indicating to execute the operation associated with the LP-WUS;
the terminal does not receive second indication information, where the second indication information is used for indicating not to execute the operation associated with the LP-WUS;
the terminal is a low-capability terminal;
the terminal is not an ordinary terminal; and
the terminal supports a first capability, where the first capability includes at least one of the following:
   supporting the LP-WUR and supporting the LP-WUS.

In this embodiment of this application, the measurement performance may include at least one of the following:
a reference signal receiving power (Reference Signal Receiving Power, RSRP), reference signal receiving quality (Reference Signal Receiving Quality, RSRQ), a signal to interference plus noise ratio (Signal to Interference plus Noise Ratio, SINR), a measurement level value, a signal intensity, and a preset measurement quantity.

The preset measurement quantity may be another newly defined measurement quantity other than the above measurement performance.

In this embodiment of this application, the measurement performance may include at least one of the following:
measurement performance for measuring a reference signal, measurement performance for measuring an LP-WUS, and measurement performance for measuring a beacon (Beacon) signal.

The above reference signal may include but not limited to:
a cell-specific reference signal, a terminal-specific reference signal, a status channel information reference signal, a synchronization signal block, and the like.

In this embodiment of this application, the measurement performance may include at least one of the following:
measurement performance for measurement by the main radio or the main radio module; and
measurement performance for measurement by a low power receiver or a lower power radio.

The measurement herein may be measuring at least one of the reference signal, the LP-WUS, and the Beacon signal to obtain at least one of the following:
the RSRP, the reference signal receiving quality (RSRQ), the signal to interference plus noise ratio (SINR), the measurement level value, the signal intensity, and the preset measurement quantity.

Since the moving speed of the first moving state is less than the moving speed of the second moving state, so that the above operation may be performed in a case of implementing low mobility of the terminal, to ensure communication performance of the terminal while reducing the power consumption of the terminal. The above operation is not performed in a case of high mobility, to avoid a decrease in the communication performance of the terminal caused by performing the above operation in a case of high mobility of the terminal.

In some implementations, that measurement performance of a serving cell satisfies a first performance condition may be understood as that the measurement performance of the serving cell indicates that a communication condition of the serving cell is better, for example, the measurement performance is better than that of the neighboring cell. In this way, the above operation may be performed in a case that the measurement performance of the serving cell is greater than that of the neighboring cell, to ensure the communication performance of the terminal while reducing the power consumption of the terminal.

In some implementations, that measurement performance of a serving cell satisfies a first performance condition may include:
the measurement performance of the serving cell is greater than or not less than a first preset threshold.

That the measurement performance of the serving cell is greater than or not less than a first preset threshold may include at least one of the following:
measurement performance within fourth preset time is greater than or not less than the first preset threshold;
the measurement performance is greater than or not less than the first preset threshold for fifth preset time;
a first preset number of times of measurement performance are greater than or not less than the first preset threshold; and
measurement performance within a first preset number of measurement cycles is greater than or not less than the first preset threshold.

In this implementation, the above operation may be performed under the following conditions:
the measurement performance is greater than or not less than a preset threshold within preset time;
the measurement performance is greater than or not less than the preset threshold for preset time;
a preset number of times of measurement performance are greater than or not less than the preset threshold; and
measurement performance within a preset number of measurement cycles is greater than or not less than the preset threshold.

In some implementations, that measurement performance of a neighboring cell satisfies a second performance condition may indicate that the measurement performance of the neighboring cell is poor, for example, the measurement performance is poorer than that of the serving cell. In this way, the above operation may be performed in a case that the measurement performance of the neighboring cell is poorer than that of the serving cell, to ensure the communication performance of the terminal while reducing the power consumption of the terminal.

In some implementations, that measurement performance of a neighboring cell satisfies a second performance condition may include:
the measurement performance of the neighboring cell is less than or not greater than a second preset threshold.

That the measurement performance of the neighboring cell is less than or not greater than a second preset threshold may include at least one of the following:
measurement performance within sixth preset time is less than or not greater than the second preset threshold;
the measurement performance is less than or not greater than the second preset threshold for seventh preset time;
a second preset number of times of measurement performance are less than or not greater than the second preset threshold; and
measurement performance within a second preset number of measurement cycles is less than or not greater than the second preset threshold.

In this implementation, the above operation may be performed under the following conditions:
the measurement performance is less than or not greater than a preset threshold within preset time;
the measurement performance is less than or not greater than the preset threshold for preset time;
a preset number of times of measurement performance are less than or not greater than the preset threshold; and
measurement performance within a preset number of measurement cycles is less than or not greater than the preset threshold.

In some implementations, the second preset condition includes at least one of the following:
measurement performance of a serving cell satisfies a third performance condition;
measurement performance of a neighboring cell satisfies a fourth performance condition;
the terminal is not in a first moving state;
the terminal is in a second moving state, where a moving speed of the first moving state is less than a moving speed of the second moving state;
the terminal does not receive first indication information, where the first indication information is used for indicating to execute the operation associated with the LP-WUS;
the terminal has received second indication information, where the second indication information is used for indicating not to execute the operation associated with the LP-WUS;
the terminal is not a low-capability terminal;
the terminal is an ordinary terminal; and
the terminal supports a second capability, where the second capability includes at least one of the following:
   a capability of supporting the LP-WUR in a case that the first preset condition is not satisfied; and
   a capability of monitoring the LP-WUS in a case that the first preset condition is not satisfied.

In some implementations, that measurement performance of a serving cell satisfies a third performance condition may indicate that the measurement performance of the serving cell is poor, for example, the measurement performance is poorer than that of the neighboring cell. In this way, the above operation may be performed only in a case that the measurement performance of the neighboring cell is better than that of the seving cell, to ensure the communication performance of the terminal while reducing the power consumption of the terminal.

In some implementations, that measurement performance of a serving cell satisfies a third performance condition includes:
the measurement performance of the serving cell is less than or not greater than a seventh preset threshold.

That the measurement performance of the serving cell is less than or not greater than a seventh preset threshold includes at least one of the following:
measurement performance within ninth preset time is less than or not greater than the seventh preset threshold;
the measurement performance is less than or not greater than the seventh preset threshold for tenth preset time;
a third preset number of times of measurement performance are less than or not greater than the seventh preset threshold; and
measurement performance within a third preset number of measurement cycles is less than or not greater than the seventh preset threshold.

In this implementation, the above operation may be performed when the following conditions are not satisfied:
being less than or not greater than a preset threshold within preset time;
being less than or not greater than the preset threshold for preset time;
a preset number of times of measurement performance are less than or not greater than the preset threshold; and
measurement performance within a preset number of measurement cycles is less than or not greater than the preset threshold.

In some implementations, that measurement performance of a neighboring cell satisfies a fourth performance condition may indicate that the measurement performance of the neighboring cell is good, for example, the measurement performance is better than that of the serving cell. In this way, the above operation may be performed in a case that the measurement performance of the neighboring cell is poorer than that of the serving cell, to ensure the communication performance of the terminal while reducing the power consumption of the terminal.

In some implementations, that measurement performance of a neighboring cell satisfies a fourth performance condition includes:
the measurement performance of the neighboring cell is greater than or not less than an eighth preset threshold.

That the measurement performance of the neighboring cell is greater than or not less than an eighth preset threshold includes at least one of the following:
measurement performance within tenth preset time is greater than or not less than the eighth preset threshold;
the measurement performance is greater than or not less than the eighth preset threshold for eleventh preset time;
a fourth preset number of times of measurement performance are greater than or not less than the eighth preset threshold; and
measurement performance within a fourth preset number of measurement cycles is greater than or not less than the eighth preset threshold.

In this implementation, the above operation may be performed when the following conditions are not satisfied:
being greater than or not less than a preset threshold within preset time;
being greater than or not less than the preset threshold for preset time;
a preset number of times of measurement performance are greater than or not less than the preset threshold; and
measurement performance within a preset number of measurement cycles is greater than or not less than the preset threshold.

In some implementations, the first moving state in the above implementation may be a low mobility state. In this way, the above operation may be performed in a case that the terminal is in low mobility, to ensure the communication performance of the terminal while reducing the power consumption of the terminal.

In some implementations, the first moving state in the above implementation may include at least one of the following:
a measurement performance variable is less than a third preset threshold;
a difference between the measurement performance and a reference quantity is less than a fourth preset threshold;
a quantity of moving cells is less than a fifth preset threshold;
a number of times of changing a parameter is less than a sixth preset threshold; and
the moving speed is less than a seventh preset threshold.

In some implementations, the first moving state includes at least one of the following:
a measurement performance variable within preset time is less than the third preset threshold;
a difference, within preset time, between the measurement performance and the reference quantity is less than the fourth preset threshold;
a quantity of moving cells within preset time is less than the fifth preset threshold; and
a number of times of changing a parameter within preset time is less than the sixth preset threshold.

It should be noted that, the plurality of preset times may be the same or different.

The changing a parameter may include at least one of the following:
changing a beam (Beam) parameter, changing a TRP parameter, changing a reference signal parameter, and the like.

In this implementation, the above operation may be performed under the following conditions:
the measurement performance variable of the terminal is less than a preset threshold, and further, is less than the preset threshold within preset time;
the difference between the measurement performance of the terminal and the reference quantity is less than a preset threshold, and further, is less than the preset threshold within preset time;
the quantity of the moving cells (including cell selection and reselection or handover) of the terminal is less than a preset quantity, and further, is less than the preset quantity within preset time; and
the number of times of changing, by the terminal, a parameter such as a beam, a TRP, and a reference signal is less than a preset number of times, and further, is less than the preset number of times within preset time.

The terminal determines low mobility according to a sensor or another moving speed determining module.

In some implementations, the second moving state in the above implementation may be a high mobility state. In this way, the above operation is not performed in a case of high mobility, to avoid a decrease in the communication performance of the terminal caused by performing the above operation in a case of high mobility of the terminal.

In some implementations, the second moving state may include at least one of the following:
the measurement performance variable is greater than or equal to the third preset threshold;
the difference between the measurement performance and the reference quantity is greater than or equal to the fourth preset threshold;
the quantity of the moving cells is greater than or equal to the fifth preset threshold;
the number of times of changing a parameter is greater than or equal to the sixth preset threshold; and
the moving speed is greater than or equal to the seventh preset threshold.

In some implementations, the second moving state includes at least one of the following:
the measurement performance variable within the preset time is greater than or equal to the third preset threshold;
the difference, within the preset time, between the measurement performance and the reference quantity is greater than or equal to the fourth preset threshold;
the quantity of the moving cells within the preset time is greater than or equal to the fifth preset threshold; and
the number of times of changing a parameter within the preset time is greater than or equal to the sixth preset threshold.

It should be noted that, the plurality of preset times may be the same or different.

The changing a parameter may include at least one of the following:
changing a beam (Beam) parameter, changing a TRP parameter, changing a reference signal parameter, and the like.

In this implementation, the above operation may be performed when the terminal is not in the following conditions:
the measurement performance variable of the terminal is greater than a preset threshold, and further, is greater than the preset threshold within preset time;
the difference between the measurement performance of the terminal and the reference quantity is greater than a preset threshold, and further, is greater than the preset threshold within preset time;
the quantity of the moving cells (including cell selection and reselection or handover) of the terminal is greater than a preset quantity, and further, is greater than the preset quantity within preset time;
the number of times of changing, by the terminal, a parameter such as a beam, a TRP, and a reference signal is greater than a preset number of times, and further, is greater than the preset number of times within preset time; and
the terminal determines high mobility according to a sensor or another moving speed determining module.

In some implementations, that the first indication information is used for indicating to execute the operation associated with the LP-WUS includes at least one of the following:
indicating to use the LP-WUS;
indicating to activate or enable the LP-WUR;
indicating to activate or enable a radio or a radio module;
indicating to activate or enable the LP-WUS function;
indicating to disable the main radio or the main radio module; and
indicating to receive the LP-WUS by the LP-WUR.

In this implementation, the above operation may be performed in a case that the indication information that indicates at least one of the above has been received, to perform the above operation based on the indication, so as to reduce the power consumption of the terminal.

The first indication information may explicitly indicate to perform the operation associated with the LP-WUS, or the first indication information may explicitly indicate the terminal to specifically perform one or more of the following operations according to the preset condition: using the LP-WUS, activating or enabling the LP-WUR, activating or enabling the radio or the radio module, activating or enabling the LP-WUS function, disabling the main radio or the main radio module, and receiving the LP-WUS by the LP-WUR.

Or, the first indication information may implicitly indicate to perform the operation associated with the LP-WUS.

In some implementations, that the second indication information is used for indicating not to execute the operation associated with the LP-WUS includes at least one of the following:
indicating to skip or ignore the LP-WUS;
indicating to deactivate or disable the LP-WUR;
indicating to deactivate or disable a radio or a radio module;
indicating to deactivate or disable the LP-WUS function;
indicating to enable the main radio or the main radio module;
indicating to monitor the PDCCH by the main radio or the main radio; and
indicating the terminal to receive the LP-WUS by the main radio or the main radio module.

In this implementation, the above operation may be performed in a case that the indication information that indicates at least one of the above is not received, so as to reduce the power consumption of the terminal.

The second indication information may explicitly indicate not to perform the operation associated with the LP-WUS, or the second indication information may explicitly indicate the terminal to specifically perform one or more of the following operations according to the preset condition: skipping or ignoring the LP-WUS, deactivating or disabling the LP-WUR, deactivating or disabling the radio or the radio module, deactivating or disabling the LP-WUS function, enabling the main radio or the main radio module, monitoring the PDCCH by the main radio or the main radio module, and receiving the LP-WUS by the main radio or the main radio module.

Or, the second indication information may implicitly indicate not to perform the operation associated with the LP-WUS.

In some implementations, the low-capability terminal includes at least one of the following:
a reduced capability (Reduced capability, RedCap) terminal;
a narrow band IoT (Narrow Band IoT, NBIoT) terminal;
a machine-type communication (Machine-Type Communication, MTC) terminal, that is, an Internet of Things terminal;
a passive terminal, such as a passive Internet of things (Passive Internet of Things, Passive IoT) terminal;
a WiFi terminal;
a sidelink (Sidelink) terminal; and
a device-to-device (Device-to-Device, D2D) terminal.

In some implementations, the ordinary terminal may include at least one of the following:
another type of terminal other than the at least one low-capability terminal; and
a cellular network terminal such as a 3G cellular network terminal, a 4G cellular network terminal, a 5G cellular network terminal, a 6G cellular network terminal, and a 7G cellular network terminal.

In an optional implementation, the operation further includes:
reporting, by the terminal, first information to a network side, where the first information is used for indicating at least one of the following:
the terminal satisfies the preset condition;
the terminal uses the LP-WUS;
the terminal requests to use the LP-WUS;
the terminal activates or enables an LP-WUR;
the terminal requests to activate or enable the LP-WUR;
the terminal activates or enables an LP-WUS function;
the terminal requests to activate or enable the LP-WUS function;
the terminal disables the main radio or the main radio module;
the terminal requests to disable the main radio or the main radio module;
the terminal monitors paging based on the LP-WUS;
the terminal requests to monitor paging based on the LP-WUS;
the terminal receives the LP-WUS by the LP-WUR; and
the terminal requests to receive the LP-WUS by the LP-WUR.

In this implementation, the first information may be used for indicating the terminal to perform the above operation to the network side, or for requesting the network side to perform the above operation, so that the terminal and the network side understand a behavior of the terminal consistently, to avoid an abnormal communication between the terminal and the network side.

In some implementations, that a terminal performs an operation under a preset condition includes:
The terminal performs the operation under the preset condition after twelfth preset time or a timer expires,
where the twelfth preset time is preset time after the terminal transmits the first information to a network side device; and the timer is a timer that starts after the terminal transmits the first information to the network side device.

In this implementation, the above operation may be performed within the preset time after the first information is transmitted or performed when the timer expires, so that the terminal may get prepared in advance before performing the above operation, to improve service performance of the terminal, for example, to ensure that a communication delay or the like is not affected. Specifically, at least one of the following may be, for example, performed within the preset time after the first information is transmitted or performed when the timer expires:
monitoring the LP-WUS;
enabling the LP-WUR radio/radio module;
activating or enabling the LP-WUS function;
entering the LP-Sleep state;
disabling the main radio/the main radio module;
stopping using the main radio/the main radio module to monitor the PDCCH;
receiving the LP-WUS by the LP-WUR; and
stopping receiving the LP-WUS by the main radio/main radio module.

It should be noted that, the above terminal provided in this application may be a terminal in a connected state or an inactive state.

In the embodiments of this application, a terminal performs an operation under a preset condition. The operation includes at least one of the following: an operation associated with an LP-WUS; disabling a main radio or a main radio module; and stopping receiving a signal by the main radio or the main radio module. In this way, when a preset condition is satisfied, at least one of an operation associated with a low power wake up signal (LP-WUS), disabling a main radio or a main radio module, and stopping receiving a signal by the main radio or the main radio module, thereby reducing power consumption of the terminal.

With reference to FIG. 5, FIG. 5 is a flowchart of a configuration transmission method according to an embodiment of this application. As shown in FIG. 5, the method includes the following steps:
Step 501: The terminal receives a configuration associated with an LP-WUS.

The configuration associated with the LP-WUS may be a configuration for monitoring the LP-WUS. For example: the configuration associated with the LP-WUS includes at least one of the following:
a relevant configuration for monitoring the LP-WUS and a relevant configuration of an LP-WUR.

The relevant configuration for monitoring the LP-WUS includes at least one of the following:
a time domain configuration for monitoring the LP-WUS, a frequency domain configuration for monitoring the LP-WUS, and a space domain configuration for monitoring the LP-WUS.

The relevant configuration of the LP-WUR includes: an LP-WUS sequence configuration.

The LP-WUS sequence configuration may indicate that the LP-WUR may receive an LP-WUS sequence corresponding to the sequence configuration.

In this embodiment, accuracy of the terminal for monitoring the LP-WUS can be improved through the above configuration.

In addition, this embodiment may be implemented in combination with the embodiment shown in FIG. 4. For example, the terminal performs the operation in the embodiment shown in FIG. 4 based on the configuration associated with the LP-WUS. In this way, in a case that a network side provides the configuration associated with the LP-WUS, an LP-WUS function and a corresponding terminal capability can be used under the above preset condition.

An executive body of the communication operation execution method provided by the embodiments of this application may be a virtual apparatus. In the embodiments of this application, an example in which the virtual apparatus performs the communication operation execution method is used to describe a communication operation execution apparatus according to an embodiment of this application. An executive body for the configuration transmission method provided in this embodiment of this application may be a virtual apparatus. In the embodiments of this application, an example in which the virtual apparatus performs the configuration transmission method is used to describe a configuration transmission apparatus according to an embodiment of this application.

With reference to FIG. 6, FIG. 6 is a structural diagram of a communication operation execution apparatus according to an embodiment of this application. As shown in FIG. 6, the communication operation execution apparatus 600 includes:
an execution module 601, configured to: perform an operation under a preset condition, where the operation includes at least one of the following:
an operation associated with a low power wake up signal (LP-WUS);
disabling a main radio or a main radio module; and
stopping receiving a signal by the main radio or the main radio module.

Optionally, the operation associated with the LP-WUS includes at least one of the following:
monitoring the LP-WUS;
activating or enabling a low power wake up receiver (LP-WUR);
activating or enabling an LP-WUS function;
entering a low power (LP) sleep state; and
receiving the LP-WUS by the LP-WUR.

Optionally, the activating or enabling an LP-WUS function includes:
temporarily activating or enabling the LP-WUS function.

Optionally, the temporarily activating or enabling the LP-WUS function includes at least one of the following:
activating or enabling the LP-WUS function, where a duration of activating or enabling the LP-WUS function is a preset duration, or time of activating or enabling the LP-WUS function is a preset quantity of cycles; and
activating or enabling the LP-WUS function till deactivation or disabling of the LP-WUS function.

Optionally, the activating or enabling the LP-WUS function till deactivation or disabling of the LP-WUS function includes at least one of the following:
activating or enabling the LP-WUS function until a network indicates the terminal to deactivate or disable the LP-WUS function;
activating or enabling the LP-WUS function until the network indicates that the terminal could disable the LP-WUR;
activating or enabling the LP-WUS function until a preset condition corresponding to deactivation or disabling of LP-WUS monitoring is satisfied; and
activating or enabling the LP-WUS function until a preset condition corresponding to deactivation or disabling of the LP-WUR is satisfied.

Optionally, the stopping receiving a signal by the main radio or the main radio module includes at least one of the following:
stopping receiving a physical downlink control channel (PDCCH) by the main radio or the main radio module; and
stopping receiving the LP-WUS by the main radio or the main radio module.

Optionally, the performing an operation includes at least one of the following:
performing, after or within first preset time, the operation associated with the LP-WUS;
disabling the main radio or the main radio module after or within second preset time; and
stopping receiving the signal by the main radio or the main radio module after or within third preset time.

Optionally, the preset condition includes at least one of the following:
a first preset condition is satisfied, and a second preset condition is not satisfied,
where the first preset condition includes a condition associated with at least one of the following:
   cell measurement performance, a moving state, a receiving state, a terminal type, and a terminal capability; and
   the second preset condition includes a condition associated with at least one of the following:
      cell measurement performance, a moving state, a receiving state, a terminal type, and a terminal capability.

Optionally, the first preset condition includes at least one of the following:
measurement performance of a serving cell satisfies a first performance condition;
measurement performance of a neighboring cell satisfies a second performance condition;
the terminal is in a first moving state;
the terminal is not in a second moving state, where a moving speed of the first moving state is less than a moving speed of the second moving state;
the terminal has received first indication information, where the first indication information is used for indicating to execute the operation associated with the LP-WUS;
the terminal does not receive second indication information, where the second indication information is used for indicating not to execute the operation associated with the LP-WUS;
the terminal is a low-capability terminal;
the terminal is not an ordinary terminal; and
the terminal supports a first capability, where the first capability includes at least one of the following:
   supporting the LP-WUR and supporting the LP-WUS.

Optionally, that measurement performance of a serving cell satisfies a first performance condition includes:
the measurement performance of the serving cell is greater than or not less than a first preset threshold;
and/or, that measurement performance of a neighboring cell satisfies a second performance condition includes:
   the measurement performance of the neighboring cell is less than or not greater than a second preset threshold.

Optionally, that the measurement performance of the serving cell is greater than or not less than a first preset threshold includes at least one of the following:
measurement performance within fourth preset time is greater than or not less than the first preset threshold;
the measurement performance is greater than or not less than the first preset threshold for fifth preset time;
a first preset number of times of measurement performance are greater than or not less than the first preset threshold; and
measurement performance within a first preset number of measurement cycles is greater than or not less than the first preset threshold.

Optionally, that the measurement performance of the neighboring cell is less than or not greater than a second preset threshold includes at least one of the following:
measurement performance within sixth preset time is less than or not greater than the second preset threshold;
the measurement performance is less than or not greater than the second preset threshold for seventh preset time;
a second preset number of times of measurement performance are less than or not greater than the second preset threshold; and
measurement performance within a second preset number of measurement cycles is less than or not greater than the second preset threshold.

Optionally, the second preset condition includes at least one of the following:
measurement performance of a serving cell satisfies a third performance condition;
measurement performance of a neighboring cell satisfies a fourth performance condition;
the terminal is not in a first moving state;
the terminal is in a second moving state, where a moving speed of the first moving state is less than a moving speed of the second moving state;
the terminal does not receive first indication information, where the first indication information is used for indicating to execute the operation associated with the LP-WUS;
the terminal has received second indication information, where the second indication information is used for indicating not to execute the operation associated with the LP-WUS;
the terminal is not a low-capability terminal;
the terminal is an ordinary terminal; and
the terminal supports a second capability, where the second capability includes at least one of the following:
   a capability of supporting the LP-WUR in a case that the first preset condition is not satisfied; and
   a capability of monitoring the LP-WUS in a case that the first preset condition is not satisfied.

Optionally, the preset condition includes:
the first preset condition is satisfied within eighth preset time, and the second preset condition is not satisfied within the eighth preset time; or
the first preset condition is satisfied within eighth preset time, or the second preset condition is not satisfied within the eighth preset time.

Optionally, the measurement performance includes at least one of the following:
reference signal receiving power (RSRP), reference signal receiving quality (RSRQ), a signal to interference plus noise ratio (SINR), a measurement level value, a signal intensity, and a preset measurement quantity;
and/or, the measurement performance includes at least one of the following:
   measurement performance for measuring a reference signal, measurement performance for measuring an LP-WUS, and measurement performance for measuring a beacon signal;
   and/or, the measurement performance includes at least one of the following:
      measurement performance for measurement by the main radio or the main radio module; and
      measurement performance for measurement by a low power radio or a lower power radio module.
Optionally, the first moving state includes at least one of the following:
   a measurement performance variable is less than a third preset threshold;
   a difference between the measurement performance and a reference quantity is less than a fourth preset threshold;
   a quantity of moving cells is less than a fifth preset threshold;
   a number of times of changing a parameter is less than a sixth preset threshold; and
   the moving speed is less than a seventh preset threshold;
   and/or, the second moving state includes at least one of the following:
      the measurement performance variable is greater than or equal to the third preset threshold;
      the difference between the measurement performance and the reference quantity is greater than or equal to the fourth preset threshold;
      the quantity of the moving cells is greater than or equal to the fifth preset threshold;
      the number of times of changing a parameter is greater than or equal to the sixth preset threshold; and
      the moving speed is greater than or equal to the seventh preset threshold.

Optionally, the first moving state includes at least one of the following:
a measurement performance variable within preset time is less than the third preset threshold;
a difference, within preset time, between the measurement performance and the reference quantity is less than the fourth preset threshold;
a quantity of moving cells within preset time is less than the fifth preset threshold; and
a number of times of changing a parameter within preset time is less than the sixth preset threshold;
and/or, the second moving state includes at least one of the following:
   the measurement performance variable within the preset time is greater than or equal to the third preset threshold;
   the difference, within the preset time, between the measurement performance and the reference quantity is greater than or equal to the fourth preset threshold;
   the quantity of the moving cells within the preset time is greater than or equal to the fifth preset threshold; and
   the number of times of changing a parameter within the preset time is greater than or equal to the sixth preset threshold.

Optionally, that the first indication information is used for indicating to execute the operation associated with the LP-WUS includes at least one of the following:
indicating to use the LP-WUS;
indicating to activate or enable the LP-WUR;
indicating to activate or enable a radio or a radio module;
indicating to activate or enable the LP-WUS function;
indicating to disable the main radio or the main radio module; and
indicating to receive the LP-WUS b the LP-WUR.

Optionally, that the second indication information is used for indicating not to execute the operation associated with the LP-WUS includes at least one of the following:
indicating to skip or ignore the LP-WUS;
indicating to deactivate or disable the LP-WUR;
indicating to deactivate or disable a radio or a radio module;
indicating to deactivate or disable the LP-WUS function;
indicating to enable the main radio or the main radio module;
indicating to monitor the PDCCH by the main radio or the main radio module; and
indicating the terminal to receive the LP-WUS by the main radio or the main radio module.

Optionally, that measurement performance of a serving cell satisfies a third performance condition includes:
the measurement performance of the serving cell is less than or not greater than a seventh preset threshold;
and/or, that measurement performance of a neighboring cell satisfies a fourth performance condition includes:
   the measurement performance of the neighboring cell is greater than or not less than an eighth preset threshold.

Optionally, that the measurement performance of the serving cell is less than or not greater than a seventh preset threshold includes at least one of the following:
measurement performance within ninth preset time is less than or not greater than the seventh preset threshold;
the measurement performance is less than or not greater than the seventh preset threshold for tenth preset time;
a third preset number of times of measurement performance are less than or not greater than the seventh preset threshold; and
measurement performance within a third preset number of measurement cycles is less than or not greater than the seventh preset threshold.

Optionally, that the measurement performance of the neighboring cell is greater than or not less than an eighth preset threshold includes at least one of the following:
measurement performance within tenth preset time is greater than or not less than the eighth preset threshold;
the measurement performance is greater than or not less than the eighth preset threshold for eleventh preset time;
a fourth preset number of times of measurement performance are greater than or not less than the eighth preset threshold; and
measurement performance within a fourth preset number of measurement cycles is greater than or not less than the eighth preset threshold.

Optionally, the operation further includes:
reporting first information to a network side, where the first information is used for indicating at least one of the following:
the terminal satisfies the preset condition;
the terminal uses the LP-WUS;
the terminal requests to use the LP-WUS;
the terminal activates or enables an LP-WUR;
the terminal requests to activate or enable the LP-WUR;
the terminal activates or enables an LP-WUS function;
the terminal requests to activate or enable the LP-WUS function;
the terminal disables the main radio or the main radio module;
the terminal requests to disable the main radio or the main radio module;
the terminal monitors paging based on the LP-WUS;
the terminal requests to monitor paging based on the LP-WUS;
the terminal receives the LP-WUS by the LP-WUR; and
the terminal requests to receive the LP-WUS by the LP-WUR.

Optionally, the execution module 601 is configured to:
perform the operation under the preset condition after twelfth preset time or a timer expires,
where the twelfth preset time is preset time after the terminal transmits the first information to a network side device; and the timer is a timer that starts after the terminal transmits the first information to the network side device.

Optionally, the apparatus further includes:
a receiving module, configured to receive a configuration associated with an LP-WUS.

Optionally, the configuration associated with the LP-WUS includes at least one of the following:
a relevant configuration for monitoring the LP-WUS and a relevant configuration of an LP-WUR.

Optionally, the relevant configuration for monitoring the LP-WUS includes at least one of the following:
a time domain configuration for monitoring the LP-WUS, a frequency domain configuration for monitoring the LP-WUS, and a space domain configuration for monitoring the LP-WUS.

The relevant configuration of the LP-WUR includes: an LP-WUS sequence configuration.

The above communication operation execution apparatus can reduce power consumption of the terminal.

The communication operation execution apparatus in the embodiments of this application may be an electronic device, for example, an electronic device having an operating system, or a component in an electronic device, such as an integrated circuit or a chip. For example: the electronic device may be a terminal or another device except a terminal. For example, the terminal may include, but is not limited to, the types of the terminals listed in the embodiments of this application, and the another device may be a server, a network attached storage (Network Attached Storage, NAS), or the like. This is not specifically limited in the embodiments of this application.

The communication operation execution apparatus provided by this embodiment of this application can implement the processes in the method embodiment shown in FIG. 4, and achieve the same technical effect. To avoid repetition, details are not described herein again.

With reference to FIG. 7, FIG. 7 is a structural diagram of a configuration transmission apparatus according to an embodiment of this application. As shown in FIG. 7, the configuration transmission apparatus 700 includes:
a receiving module 701, configured to receive a configuration associated with an LP-WUS.

Optionally, the configuration associated with the LP-WUS includes at least one of the following:
a relevant configuration for monitoring the LP-WUS and a relevant configuration of an LP-WUR.

Optionally, the relevant configuration for monitoring the LP-WUS includes at least one of the following:
a time domain configuration for monitoring the LP-WUS, a frequency domain configuration for monitoring the LP-WUS, and a space domain configuration for monitoring the LP-WUS.

The relevant configuration of the LP-WUR includes: an LP-WUS sequence configuration.

In addition, this embodiment may be implemented in combination with the embodiment shown in FIG. 6.

The above configuration transmission apparatus can improve accuracy of a terminal for monitoring the LP-WUS.

The configuration transmission apparatus in this embodiment of this application may be an electronic device, such as an electronic device having an operating system, or a component in the electronic device, such as an integrated circuit or a chip. For example: the electronic device may be a terminal or another device except a terminal. For example, the terminal may include, but is not limited to, the types of the terminals listed in the embodiments of this application, and the another device may be a server, a network attached storage (Network Attached Storage, NAS), or the like. This is not specifically limited in the embodiments of this application.

The configuration transmission apparatus provided by this embodiment of this application can implement the processes in the method embodiment shown in FIG. 5, and achieve the same technical effect, details of which are omitted here for brevity.

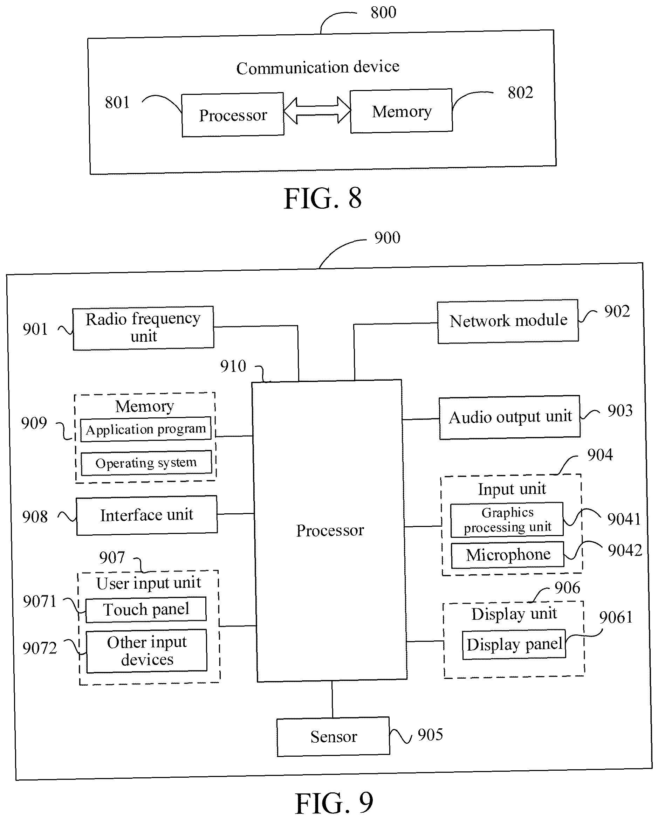

Optionally, as shown in FIG. 8, an embodiment of this application further provides a communication device 800, including a processor 801 and a memory 802. The memory 802 stores a program or an instruction runnable on the processor 801. For example, when the communication device 800 is a terminal, the program or instruction, when executed by the processor 801, implements the steps of the above communication operation execution method embodiment and can achieve the same technical effects, details of which are omitted here for brevity.

An embodiment of this application further provides a communication device, including a processor and a communication interface. The processor is configured to perform an operation under a preset condition. The operation includes at least one of the following: an operation associated with a low power wake up signal (LP-WUS); disabling a main radio or a main radio module; and stopping receiving a signal by the main radio or the main radio module. Or, an embodiment of this application further provides a communication device, including a processor and a communication interface. The communication interface is configured to receive a configuration associated with an LP-WUS. The communication device embodiment corresponds to the above communication operation execution method embodiment or the above configuration transmission method embodiment. The implementation processes and implementations of the above method embodiment can be applied to this communication device embodiment, and can achieve the same technical effects.

Specifically, FIG. 9 is a schematic structural diagram of hardware of a terminal for implementing an embodiment of this application.

The terminal 900 includes, but is not limited to: at least some of components, such as a radio frequency unit 901, a network module 902, an audio output unit 903, an input unit 904, a sensor 905, a display unit 906, a user input unit 907, an interface unit 908, a memory 909, and a processor 910.

Those skilled in the art can understand that the terminal 900 further includes a power supply (such as a battery) for supplying power to the components. The power supply may be logically connected to the processor 910 by using a power management system, thereby implementing functions such as charging, discharging, and power consumption management by using the power management system. The structures of the terminal shown in FIG. 9 constitute no limitation on the terminal, and the terminal may include more or fewer components than those shown in the figure, or some components may be combined, or a different component deployment may be used, details of which are omitted here.

It should be understood that in the embodiments of this application, the input unit 904 may include a graphics processing unit (Graphics Processing Unit, GPU) 9041 and a microphone 9042, and the GPU 9041 processes image data of static pictures or videos obtained by an image capturing apparatus (such as a camera) in a video capturing mode or an image capturing mode. The display unit 906 may include a display panel 9061, and the display panel 9061 may be configured by using a liquid crystal display, an organic light-emitting diode, or the like. The user input unit 907 includes at least one of a touch panel 9071 and another input device 9072. The touch panel 9071 is also referred to as a touchscreen. The touch panel 9071 may include two parts: a touch detection apparatus and a touch controller. The another input device 9072 may include, but is not limited to, a physical keyboard, a functional key (such as a volume control key or a switch key), a track ball, a mouse, and a joystick, which is not described herein in detail.

In this embodiment of this application, after receiving downlink data from a network side device, the radio frequency unit 901 may transmit the data to the processor 910 for processing. In addition, the radio frequency unit 901 may transmit uplink data to the network side device. Generally, the radio frequency unit 901 includes, but is not limited to, an antenna, an amplifier, a transceiver, a coupler, a low noise amplifier, a duplexer, and the like.

The memory 909 may be configured to store a software program or instruction and various data. The memory 909 may mainly include a first storage area for storing a program or an instruction and a second storage area for storing data. In the first storage area, the following may be stored: an operating system, application programs or instructions required by at least one function (for example, a sound playing function or an image display function), and the like. In addition, the memory 909 may include a volatile memory or a non-volatile memory, or may include both a volatile memory and a non-volatile memory. The non-volatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM), or a flash memory. The volatile memory may be a random access memory (Random Access Memory, RAM), a static RAM (Static RAM, SRAM), a dynamic RAM (Dynamic RAM, DRAM), a synchronous DRAM (Synchronous DRAM, SDRAM), a double data rate SDRAM (Double Data Rate SDRAM, DDRSDRAM), an enhanced SDRAM (Enhanced SDRAM, ESDRAM), a synch link DRAM (Synch link DRAM, SLDRAM), and a direct rambus RAM (Direct Rambus RAM, DRRAM). The memory 909 in this embodiment of this application includes, but is not limited to, these memories and any other memory of a suitable type.

The processor 910 may include one or more processing units. Optionally, the processor 910 may integrate an application processor and a modem processor, where the application processor mainly processes operations involving an operating system, a user interface, an application program, and the like, and the modem processor mainly processes a wireless communication signal, such as a baseband processor. It can be understood that the above modem may not be integrated into the processor 910.

In an embodiment,
the radio frequency unit 901 is configured to: perform an operation under a preset condition, where the operation includes at least one of the following:
an operation associated with a low power wake up signal (LP-WUS);
disabling a main radio or a main radio module; and
stopping receiving a signal by the main radio or the main radio module.

Optionally, the operation associated with the LP-WUS includes at least one of the following:
monitoring the LP-WUS;
activating or enabling a low power wake up receiver (LP-WUR);
activating or enabling an LP-WUS function;
entering a low power (LP) sleep state; and
receiving the LP-WUS by the LP-WUR.

Optionally, the activating or enabling an LP-WUS function includes:
temporarily activating or enabling the LP-WUS function.

Optionally, the temporarily activating or enabling the LP-WUS function includes at least one of the following:
activating or enabling the LP-WUS function, where a duration of activating or enabling the LP-WUS function is a preset duration, or time of activating or enabling the LP-WUS function is a preset quantity of cycles; and
activating or enabling the LP-WUS function till deactivation or disabling of the LP-WUS function.

Optionally, the activating or enabling the LP-WUS function till deactivation or disabling of the LP-WUS function includes at least one of the following:
activating or enabling the LP-WUS function until a network indicates the terminal to deactivate or disable the LP-WUS function;
activating or enabling the LP-WUS function until the network indicates that the terminal could disable the LP-WUR;
activating or enabling the LP-WUS function until a preset condition corresponding to deactivation or disabling of LP-WUS monitoring is satisfied; and
activating or enabling the LP-WUS function until a preset condition corresponding to deactivation or disabling of the LP-WUR is satisfied.

Optionally, the stopping receiving a signal by the main radio or the main radio module includes at least one of the following:
stopping receiving a physical downlink control channel (PDCCH) by the main radio or the main radio module; and
stopping receiving the LP-WUS by the main radio or the main radio module.

Optionally, the performing an operation includes at least one of the following:
performing, after or within first preset time, the operation associated with the LP-WUS;
disabling the main radio or the main radio module after or within second preset time; and
stopping receiving the signal by the main radio or the main radio module after or within third preset time.

Optionally, the preset condition includes at least one of the following:
a first preset condition is satisfied, and a second preset condition is not satisfied,
where the first preset condition includes a condition associated with at least one of the following:
   cell measurement performance, a moving state, a receiving state, a terminal type, and a terminal capability; and
   the second preset condition includes a condition associated with at least one of the following:
      cell measurement performance, a moving state, a receiving state, a terminal type, and a terminal capability.

Optionally, the first preset condition includes at least one of the following:
measurement performance of a serving cell satisfies a first performance condition;
measurement performance of a neighboring cell satisfies a second performance condition;
the terminal is in a first moving state;
the terminal is not in a second moving state, where a moving speed of the first moving state is less than a moving speed of the second moving state;
the terminal has received first indication information, where the first indication information is used for indicating to execute the operation associated with the LP-WUS;
the terminal does not receive second indication information, where the second indication information is used for indicating not to execute the operation associated with the LP-WUS;
the terminal is a low-capability terminal;
the terminal is not an ordinary terminal; and
the terminal supports a first capability, where the first capability includes at least one of the following:
   supporting the LP-WUR and supporting the LP-WUS.

Optionally, that measurement performance of a serving cell satisfies a first performance condition includes:
the measurement performance of the serving cell is greater than or not less than a first preset threshold;
and/or, that measurement performance of a neighboring cell satisfies a second performance condition includes:
   the measurement performance of the neighboring cell is less than or not greater than a second preset threshold.

Optionally, that the measurement performance of the serving cell is greater than or not less than a first preset threshold includes at least one of the following:
measurement performance within fourth preset time is greater than or not less than the first preset threshold;
the measurement performance is greater than or not less than the first preset threshold for fifth preset time;
a first preset number of times of measurement performance are greater than or not less than the first preset threshold; and
measurement performance within a first preset number of measurement cycles is greater than or not less than the first preset threshold.

Optionally, that the measurement performance of the neighboring cell is less than or not greater than a second preset threshold includes at least one of the following:
measurement performance within sixth preset time is less than or not greater than the second preset threshold;
the measurement performance is less than or not greater than the second preset threshold for seventh preset time;
a second preset number of times of measurement performance are less than or not greater than the second preset threshold; and
measurement performance within a second preset number of measurement cycles is less than or not greater than the second preset threshold.

Optionally, the second preset condition includes at least one of the following:
measurement performance of a serving cell satisfies a third performance condition;
measurement performance of a neighboring cell satisfies a fourth performance condition;
the terminal is not in a first moving state;
the terminal is in a second moving state, where a moving speed of the first moving state is less than a moving speed of the second moving state;
the terminal does not receive first indication information, where the first indication information is used for indicating to execute the operation associated with the LP-WUS;
the terminal has received second indication information, where the second indication information is used for indicating not to execute the operation associated with the LP-WUS;
the terminal is not a low-capability terminal;
the terminal is an ordinary terminal; and
the terminal supports a second capability, where the second capability includes at least one of the following:
   a capability of supporting the LP-WUR in a case that the first preset condition is not satisfied; and
   a capability of monitoring the LP-WUS in a case that the first preset condition is not satisfied.

Optionally, the preset condition includes:
the first preset condition is satisfied within eighth preset time, and the second preset condition is not satisfied within the eighth preset time; or
the first preset condition is satisfied within eighth preset time, or the second preset condition is not satisfied within the eighth preset time.

Optionally, the measurement performance includes at least one of the following:
reference signal receiving power (RSRP), reference signal receiving quality (RSRQ), a signal to interference plus noise ratio (SINR), a measurement level value, a signal intensity, and a preset measurement quantity;
and/or, the measurement performance includes at least one of the following:
   measurement performance for measuring a reference signal, measurement performance for measuring an LP-WUS, and measurement performance for measuring a beacon signal;
   and/or, the measurement performance includes at least one of the following:
      measurement performance for measurement by the main radio or the main radio module; and
      measurement performance for measurement by a low power radio or a lower power radio.

Optionally, the first moving state includes at least one of the following:
a measurement performance variable is less than a third preset threshold;
a difference between the measurement performance and a reference quantity is less than a fourth preset threshold;
a quantity of moving cells is less than a fifth preset threshold;
a number of times of changing a parameter is less than a sixth preset threshold; and
the moving speed is less than a seventh preset threshold;
and/or, the second moving state includes at least one of the following:
   the measurement performance variable is greater than or equal to the third preset threshold;
   the difference between the measurement performance and the reference quantity is greater than or equal to the fourth preset threshold;
   the quantity of the moving cells is greater than or equal to the fifth preset threshold;
   the number of times of changing a parameter is greater than or equal to the sixth preset threshold; and
   the moving speed is greater than or equal to the seventh preset threshold.

Optionally, the first moving state includes at least one of the following:
a measurement performance variable within preset time is less than the third preset threshold;
a difference, within preset time, between the measurement performance and the reference quantity is less than the fourth preset threshold;
a quantity of moving cells within preset time is less than the fifth preset threshold; and
a number of times of changing a parameter within preset time is less than the sixth preset threshold;
and/or, the second moving state includes at least one of the following:
   the measurement performance variable within the preset time is greater than or equal to the third preset threshold;
   the difference, within the preset time, between the measurement performance and the reference quantity is greater than or equal to the fourth preset threshold;
   the quantity of the moving cells within the preset time is greater than or equal to the fifth preset threshold; and
   the number of times of changing a parameter within the preset time is greater than or equal to the sixth preset threshold.

Optionally, that the first indication information is used for indicating to execute the operation associated with the LP-WUS includes at least one of the following:
indicating to use the LP-WUS;
indicating to activate or enable the LP-WUR;
indicating to activate or enable a radio or a radio module;
indicating to activate or enable the LP-WUS function;
indicating to disable the main radio or the main radio module; and
indicating to receive the LP-WUS by the LP-WUR.

Optionally, that the second indication information is used for indicating not to execute the operation associated with the LP-WUS includes at least one of the following:
indicating to skip or ignore the LP-WUS;
indicating to deactivate or disable the LP-WUR;
indicating to deactivate or disable a radio or a radio module;
indicating to deactivate or disable the LP-WUS function;
indicating to enable the main radio or the main radio module;
indicating to monitor the PDCCH by the main radio or the main radio module; and
indicating the terminal to receive the LP-WUS by the main radio or the main radio module.

Optionally, that measurement performance of a serving cell satisfies a third performance condition includes:
the measurement performance of the serving cell is less than or not greater than a seventh preset threshold;
and/or, that measurement performance of a neighboring cell satisfies a fourth performance condition includes:
   the measurement performance of the neighboring cell is greater than or not less than an eighth preset threshold.

Optionally, that the measurement performance of the serving cell is less than or not greater than a seventh preset threshold includes at least one of the following:
measurement performance within ninth preset time is less than or not greater than the seventh preset threshold;
the measurement performance is less than or not greater than the seventh preset threshold for tenth preset time;
a third preset number of times of measurement performance are less than or not greater than the seventh preset threshold; and
measurement performance within a third preset number of measurement cycles is less than or not greater than the seventh preset threshold.

Optionally, that the measurement performance of the neighboring cell is greater than or not less than an eighth preset threshold includes at least one of the following:
measurement performance within tenth preset time is greater than or not less than the eighth preset threshold;
the measurement performance is greater than or not less than the eighth preset threshold for eleventh preset time;
a fourth preset number of times of measurement performance are greater than or not less than the eighth preset threshold; and
measurement performance within a fourth preset number of measurement cycles is greater than or not less than the eighth preset threshold.

Optionally, the operation further includes:
reporting first information to a network side, where the first information is used for indicating at least one of the following:
the terminal satisfies the preset condition;
the terminal uses the LP-WUS;
the terminal requests to use the LP-WUS;
the terminal activates or enables an LP-WUR;
the terminal requests to activate or enable the LP-WUR;
the terminal activates or enables an LP-WUS function;
the terminal requests to activate or enable the LP-WUS function;
the terminal disables the main radio or the main radio module;
the terminal requests to disable the main radio or the main radio module;
the terminal monitors paging based on the LP-WUS;
the terminal requests to monitor paging based on the LP-WUS;
the terminal receives the LP-WUS by the LP-WUR; and
the terminal requests to receive the LP-WUS by the LP-WUR.

Optionally, the performing an operation under a preset condition includes:
performing the operation under the preset condition after twelfth preset time or a timer expires,
where the twelfth preset time is preset time after the terminal transmits the first information to a network side device; and the timer is a timer that starts after the terminal transmits the first information to the network side device.

In another embodiment: the radio frequency unit 901 is configured to: receive a configuration associated with an LP-WUS.

Optionally, the configuration associated with the LP-WUS includes at least one of the following:
a relevant configuration for monitoring the LP-WUS and a relevant configuration of an LP-WUR.

Optionally, the relevant configuration for monitoring the LP-WUS includes at least one of the following:
a time domain configuration for monitoring the LP-WUS, a frequency domain configuration for monitoring the LP-WUS, and a space domain configuration for monitoring the LP-WUS.

The relevant configuration of the LP-WUR includes: an LP-WUS sequence configuration.

Power consumption of the terminal can be reduced.

An embodiment of this application further provides a readable storage medium. The readable storage medium stores a program or an instruction. The program or instruction, when executed by a processor, implements the steps of the above communication operation execution method provided by the embodiments of this application or the steps of the above configuration transmission method provided by the embodiments of this application.

The processor is the processor in the terminal in the embodiments described above. The readable storage medium includes a computer-readable storage medium, for example, a computer read-only memory (ROM), a random access memory (RAM), a magnetic disc, a compact disc, or the like.

An embodiment of this application further provides a chip. The chip includes a processor and a communication interface. The communication interface is coupled to the processor. The processor is configured to run a program or an instruction to implement the processes of the above communication operation execution method embodiment or the processes of the above configuration transmission method embodiment, and can achieve the same technical effects, details of which are omitted here for brevity.

It should be understood that the chip mentioned in the embodiments of this application can alternatively be referred to as a system chip, a chip system, or a system-on-chip.

An embodiment of this application further provides a computer program/program product. The computer program/program product is stored in a storage medium and executed by at least one processor to implement the processes of the above communication operation execution method embodiment or the processes of the above configuration transmission method embodiment, and can achieve the same technical effects, details of which are omitted here for brevity.

It should be noted that, the terms "include", "comprise", or any other variations thereof herein are intended to cover a non-exclusive inclusion, so that a processor, method, object, or apparatus including a series of elements not only includes those elements, but also includes other elements not specifically listed, or includes inherent elements of this process, method, object, or apparatus. Without more restrictions, elements defined by the sentence "including one" does not exclude that there are still other same elements in the process, method, object, or apparatus including these elements. In addition, it should be noted that the scope of the methods and devices in the embodiments of the present application is not limited to executing functions in the order shown or discussed, but may alternatively include executing functions in a substantially simultaneous manner or in an opposite order according to the functions involved. For example, the methods described may be executed in a different order than that described, and steps may alternatively be added, omitted, or combined. In addition, features described with reference to some examples may alternatively be combined in other examples.

According to the descriptions in the foregoing implementations, a person skilled in the art may clearly learn that the method according to the foregoing embodiment may be implemented by relying on software and an essential commodity hardware platform or by using hardware, but the former is a better implementation in most cases. Based on such an understanding, the technical solutions of this application essentially, or the part contributing to the prior art, may be presented in the form of a computer software product. The computer software product is stored in a storage medium (for example, a ROM/RAM, a magnetic disc, or a compact disc) including several instructions to enable a terminal (which may be a mobile phone, a computer, a server, an air conditioner, a network device, or the like) to perform the methods described in the embodiments of this application.

Embodiments of this application are described above with reference to the accompanying drawings. However, this application is not limited to the foregoing specific embodiments. The foregoing specific embodiments are only illustrative rather than restrictive. Inspired by this application, a person of ordinary skill in the art can still derive a plurality of variations without departing from the essence of this application and the protection scope of the claims. All these variations shall fall within the protection of this application.

## Claims

1. A communication operation execution method, comprising:
performing, by a terminal, an operation under a preset condition, wherein the operation comprises at least one of the following:
an operation associated with a low power wake up signal (LP-WUS);
disabling a main radio or a main radio module; and
stopping receiving a signal by the main radio or the main radio module.

2. The method according to claim 1, wherein the operation associated with the LP-WUS comprises at least one of the following:
monitoring the LP-WUS;
activating or enabling a low power wake up receiver (LP-WUR);
activating or enabling an LP-WUS function;
entering a low power (LP) sleep state; and
receiving the LP-WUS by the LP-WUR.

3. The method according to claim 2, wherein the activating or enabling an LP-WUS function comprises:
temporarily activating or enabling the LP-WUS function.

4. The method according to claim 3, wherein the temporarily activating or enabling the LP-WUS function comprises at least one of the following:
activating or enabling the LP-WUS function, wherein a duration of activating or enabling the LP-WUS function is a preset duration, or time of activating or enabling the LP-WUS function is a preset quantity of cycles; and
activating or enabling the LP-WUS function till deactivation or disabling of the LP-WUS function.

5. The method according to claim 4, wherein the activating or enabling the LP-WUS function till deactivation or disabling of the LP-WUS function comprises at least one of the following:
activating or enabling the LP-WUS function until a network indicates the terminal to deactivate or disable the LP-WUS function;
activating or enabling the LP-WUS function until the network indicates that the terminal could disable the LP-WUR;
activating or enabling the LP-WUS function until a preset condition corresponding to deactivation or disabling of LP-WUS monitoring is satisfied; and
activating or enabling the LP-WUS function until a preset condition corresponding to deactivation or disabling of the LP-WUR is satisfied.

6. The method according to any one of claims 1 to 5, wherein the stopping receiving a signal by the main radio or the main radio module comprises at least one of the following:
stopping receiving a physical downlink control channel (PDCCH) by the main radio or the main radio module; and
stopping receiving the LP-WUS by the main radio or the main radio module.

7. The method according to any one of claims 1 to 6, wherein the performing, by a terminal, an operation comprises at least one of the following:
performing, after or within first preset time, the operation associated with the LP-WUS;
disabling the main radio or the main radio module after or within second preset time; and
stopping receiving the signal by the main radio or the main radio module after or within third preset time.

8. The method according to any one of claims 1 to 7, wherein the preset condition comprises at least one of the following:
a first preset condition is satisfied, and a second preset condition is not satisfied,
wherein the first preset condition comprises a condition associated with at least one of the following:
cell measurement performance, a moving state, a receiving state, a terminal type, and a terminal capability; and
the second preset condition comprises a condition associated with at least one of the following:
cell measurement performance, a moving state, a receiving state, a terminal type, and a terminal capability.

9. The method according to claim 8, wherein the first preset condition comprises at least one of the following:
measurement performance of a serving cell satisfies a first performance condition;
measurement performance of a neighboring cell satisfies a second performance condition;
the terminal is in a first moving state;
the terminal is not in a second moving state, wherein a moving speed of the first moving state is less than a moving speed of the second moving state;
the terminal has received first indication information, wherein the first indication information is used for indicating to execute the operation associated with the LP-WUS;
the terminal does not receive second indication information, wherein the second indication information is used for indicating not to execute the operation associated with the LP-WUS;
the terminal is a low-capability terminal;
the terminal is not an ordinary terminal; and
the terminal supports a first capability, wherein the first capability comprises at least one of the following:
supporting the LP-WUR and supporting the LP-WUS.

10. The method according to claim 9, wherein that measurement performance of a serving cell satisfies a first performance condition comprises:
the measurement performance of the serving cell is greater than or not less than a first preset threshold;
and/or, that measurement performance of a neighboring cell satisfies a second performance condition comprises:
the measurement performance of the neighboring cell is less than or not greater than a second preset threshold.

11. The method according to claim 10, wherein that the measurement performance of the serving cell is greater than or not less than a first preset threshold comprises at least one of the following:
measurement performance within fourth preset time is greater than or not less than the first preset threshold;
the measurement performance is greater than or not less than the first preset threshold for fifth preset time;
a first preset number of times of measurement performance are greater than or not less than the first preset threshold; and
measurement performance within a first preset number of measurement cycles is greater than or not less than the first preset threshold.

12. The method according to claim 10, wherein that the measurement performance of the neighboring cell is less than or not greater than a second preset threshold comprises at least one of the following:
measurement performance within sixth preset time is less than or not greater than the second preset threshold;
the measurement performance is less than or not greater than the second preset threshold for seventh preset time;
a second preset number of times of measurement performance are less than or not greater than the second preset threshold; and
measurement performance within a second preset number of measurement cycles is less than or not greater than the second preset threshold.

13. The method according to claim 8, wherein the second preset condition comprises at least one of the following:
measurement performance of a serving cell satisfies a third performance condition;
measurement performance of a neighboring cell satisfies a fourth performance condition;
the terminal is not in a first moving state;
the terminal is in a second moving state, wherein a moving speed of the first moving state is less than a moving speed of the second moving state;
the terminal does not receive first indication information, wherein the first indication information is used for indicating to execute the operation associated with the LP-WUS;
the terminal has received second indication information, wherein the second indication information is used for indicating not to execute the operation associated with the LP-WUS;
the terminal is not a low-capability terminal;
the terminal is an ordinary terminal; and
the terminal supports a second capability, wherein the second capability comprises at least one of the following:
a capability of supporting the LP-WUR in a case that the first preset condition is not satisfied; and
a capability of monitoring the LP-WUS in a case that the first preset condition is not satisfied.

14. The method according to claim 8, wherein the preset condition comprises:
the first preset condition is satisfied within eighth preset time, and the second preset condition is not satisfied within the eighth preset time; or
the first preset condition is satisfied within eighth preset time, or the second preset condition is not satisfied within the eighth preset time.

15. The method according to claim 9 or 13, wherein the measurement performance comprises at least one of the following:
reference signal receiving power (RSRP), reference signal receiving quality (RSRQ), a signal to interference plus noise ratio (SINR), a measurement level value, a signal intensity, and a preset measurement quantity;
and/or, the measurement performance comprises at least one of the following:
measurement performance for measuring a reference signal, measurement performance for measuring an LP-WUS, and measurement performance for measuring a beacon signal;
and/or, the measurement performance comprises at least one of the following:
measurement performance for measurement by the main radio or the main radio module;
and
measurement performance for measurement by a low power radio or a lower power radio.

16. The method according to claim 9 or 13, wherein the first moving state comprises at least one of the following:
a measurement performance variable is less than a third preset threshold;
a difference between the measurement performance and a reference quantity is less than a fourth preset threshold;
a quantity of moving cells is less than a fifth preset threshold;
a number of times of changing a parameter is less than a sixth preset threshold; and
the moving speed is less than a seventh preset threshold;
and/or, the second moving state comprises at least one of the following:
the measurement performance variable is greater than or equal to the third preset threshold;
the difference between the measurement performance and the reference quantity is greater than or equal to the fourth preset threshold;
the quantity of the moving cells is greater than or equal to the fifth preset threshold;
the number of times of changing a parameter is greater than or equal to the sixth preset threshold; and
the moving speed is greater than or equal to the seventh preset threshold.

17. The method according to claim 16, wherein the first moving state comprises at least one of the following:
a measurement performance variable within preset time is less than the third preset threshold;
a difference, within preset time, between the measurement performance and the reference quantity is less than the fourth preset threshold;
a quantity of moving cells within preset time is less than the fifth preset threshold; and
a number of times of changing a parameter within preset time is less than the sixth preset threshold;
and/or, the second moving state comprises at least one of the following:
the measurement performance variable within the preset time is greater than or equal to the third preset threshold;
the difference, within the preset time, between the measurement performance and the reference quantity is greater than or equal to the fourth preset threshold;
the quantity of the moving cells within the preset time is greater than or equal to the fifth preset threshold; and
the number of times of changing a parameter within the preset time is greater than or equal to the sixth preset threshold.

18. The method according to claim 9 or 13, wherein that the first indication information is used for indicating to execute the operation associated with the LP-WUS comprises at least one of the following:
indicating to use the LP-WUS;
indicating to activate or enable the LP-WUR;
indicating to activate or enable a radio or a radio module;
indicating to activate or enable the LP-WUS function;
indicating to disable the main radio or the main radio module; and
indicating to receive the LP-WUS by the LP-WUR.

19. The method according to claim 9 or 13, wherein that the second indication information is used for indicating not to execute the operation associated with the LP-WUS comprises at least one of the following:
indicating to skip or ignore the LP-WUS;
indicating to deactivate or disable the LP-WUR;
indicating to deactivate or disable a radio or a radio module;
indicating to deactivate or disable the LP-WUS function;
indicating to enable the main radio or the main radio module;
indicating to monitor the PDCCH by the main radio or the main radio module; and
indicating the terminal to receive the LP-WUS by the main radio or the main radio module.

20. The method according to claim 13, wherein that measurement performance of a serving cell satisfies a third performance condition comprises:
the measurement performance of the serving cell is less than or not greater than a seventh preset threshold;
and/or, that measurement performance of a neighboring cell satisfies a fourth performance condition comprises:
the measurement performance of the neighboring cell is greater than or not less than an eighth preset threshold.

21. The method according to claim 20, wherein that the measurement performance of the serving cell is less than or not greater than a seventh preset threshold comprises at least one of the following:
measurement performance within ninth preset time is less than or not greater than the seventh preset threshold;
the measurement performance is less than or not greater than the seventh preset threshold for tenth preset time;
a third preset number of times of measurement performance are less than or not greater than the seventh preset threshold; and
measurement performance within a third preset number of measurement cycles is less than or not greater than the seventh preset threshold.

22. The method according to claim 20, wherein that the measurement performance of the neighboring cell is greater than or not less than an eighth preset threshold comprises at least one of the following:
measurement performance within tenth preset time is greater than or not less than the eighth preset threshold;
the measurement performance is greater than or not less than the eighth preset threshold for eleventh preset time;
a fourth preset number of times of measurement performance are greater than or not less than the eighth preset threshold; and
measurement performance within a fourth preset number of measurement cycles is greater than or not less than the eighth preset threshold.

23. The method according to any one of claims 1 to 22, wherein the operation further comprises:
reporting, by the terminal, first information to a network side, wherein the first information is used for indicating at least one of the following:
the terminal satisfies the preset condition;
the terminal uses the LP-WUS;
the terminal requests to use the LP-WUS;
the terminal activates or enables an LP-WUR;
the terminal requests to activate or enable the LP-WUR;
the terminal activates or enables an LP-WUS function;
the terminal requests to activate or enable the LP-WUS function;
the terminal disables the main radio or the main radio module;
the terminal requests to disable the main radio or the main radio module;
the terminal monitors paging based on the LP-WUS;
the terminal requests to monitor paging based on the LP-WUS;
the terminal receives the LP-WUS by the LP-WUR; and
the terminal requests to receive the LP-WUS by the LP-WUR.

24. The method according to claim 23, wherein the performing, by a terminal, an operation under a preset condition comprises;
performing, by the terminal, the operation under the preset condition after twelfth preset time or a timer expires,
wherein the twelfth preset time is preset time after the terminal transmits the first information to a network side device; and the timer is a timer that starts after the terminal transmits the first information to the network side device.

25. The method according to any one of claims 1 to 24, further comprising:
receiving, by the terminal, a configuration associated with an LP-WUS.

26. The method according to claim 25, wherein the configuration associated with the LP-WUS comprises at least one of the following:
a relevant configuration for monitoring the LP-WUS and a relevant configuration of an LP-WUR.

27. The method according to claim 26, wherein the relevant configuration for monitoring the LP-WUS comprises at least one of the following:
a time domain configuration for monitoring the LP-WUS, a frequency domain configuration for monitoring the LP-WUS, and a space domain configuration for monitoring the LP-WUS; and
the relevant configuration of the LP-WUR comprises: an LP-WUS sequence configuration.

28. A communication operation execution apparatus, comprising:
an execution module, configured to: perform an operation under a preset condition, wherein the operation comprises at least one of the following:
an operation associated with a low power wake up signal (LP-WUS);
disabling a main radio or a main radio module; and
stopping receiving a signal by the main radio or the main radio module.

29. A terminal, comprising a processor and a memory, wherein the memory stores a program or an instruction executable on the processor, and the program or the instruction, when executed by the processor, implements the steps of the communication operation execution method according to any one of claims 1 to 27.

30. A readable storage medium, having a program or an instruction stored thereon, wherein the program or the instruction, when executed by a processor, implements the steps of the communication operation execution method according to any one of claims 1 to 27.
